# EUROPEAN PATENT SPECIFICATION

(11) **EP 4 122 993 B1**
(45) Date of publication and mention of the grant of the patent: **29.01.2025**
(21) Application number: 21772040.8
(22) Date of filing: 24.02.2021
(51) Int. Cl.: F16D 69/02

(54) **FRICTION MATERIAL**
REIBUNGSMATERIAL
MATÉRIAU DE FROTTEMENT

(30) Priority: 16.03.2020 JP 2020045002
(43) Date of publication of application: 25.01.2023
(73) Proprietor: Nisshinbo Brake Inc., Chuo-ku Tokyo 103-8650 (JP)
(72) Inventor: TAKADA Toshiya, Oura-gun Gunma 370-0614 (JP); YAMAMOTO Kazuhide, Oura-gun Gunma 370-0614 (JP)
(74) Representative: Stolmár & Partner Patentanwälte PartG mbB
(86) International application number: PCT/JP2021/006750
(87) International publication number: WO 2021/187022

(56) References cited:
- WO-A1-2004/069954
- JP-A- 2000 160 135
- JP-A- 2015 093 936
- JP-A- 2016 035 005
- JP-A- H09 151 367
- US-A1- 2015 369 320

## Description

### [field of invention]

This invention relates to a friction material used for a disc brake pad, which is manufactured by forming a non-asbestos-organic (NAO) friction material composition.

### [background of invention]

Conventionally, a disc brake is used as a braking device for a passenger car, and a disc brake pad, which is formed by adhering a friction material on a metal base member, is used as a friction member thereof.

Recently, a demand for quietness in brakes increases, and it is a trend to use a disc brake pad employing a NAO friction material that does not contain a steel type fiber such as a steel fiber and a stainless fiber as a fiber base.

Conventionally, for a NAO friction material, in order to meet the demand of the required performance, 5 - 20 weight % of a copper component, relative to the entire amount of the friction material composition, is added as an essential component such as a fiber or a particle of a copper or a copper alloy.

However, recently, it is suggested that the above-described friction material, when braking, discharges the copper as an abrasion powder and that the discharged copper flows in a river, lake, and/or ocean, and then the copper possibly contaminates an area around the discharged copper. Accordingly, the NAO friction material that reduces the amount of the copper component is on demand.

The patent document 1 discloses the friction material composition that has the fiber base, the binder, and the friction modifier, wherein the friction material composition contains 0.5 mass % or less, relative to the entire amount of the friction material composition, of the copper component and contains the fluoropolymer particle, and discloses the friction material, which is formed by the friction material composition.

According to the patent document 1, the friction material discharges very minimum amount of copper contained in the abrasive powder that is generated during the braking action, and therefore the friction material reduces the negative effects on an environment, while providing a stable friction coefficient, a noiseproof property, and a wear resistance, and especially reduces a brake noise after leaving the car in the cold condition.

On the other hand, recently, another problem of brake noise that is generated just before stopping the car after repeating low load braking actions and water entry between the friction material surface and the mating member surface (thereafter, just-before-stopping noise).

The patent document 2 discloses the friction material used for the disc brake pad, which is manufactured by forming the NAO friction material composition that does not contain the copper component, wherein the friction material composition practically does not contain the metal component but contains 15 - 25 weight %, relative to the entire amount of the friction material composition, of the non-whisker-like titanate as the titanate, 15 - 25 weight %, relative to the entire amount of the friction material composition, of the zirconium oxide with the average particle diameter of 1.0 - 4.0µm as the inorganic friction modifier, and 4 - 6 weight %, relative to the entire amount of the friction material composition, of the cleavable mineral particle as the inorganic friction modifier.

According to the patent document 2, the invention can provide the friction material that satisfies the laws and regulations with respect to the amount of the copper component contained therein and at the same time inhibits the generation of the just-before-stopping noise.

The invention in the patent document 1, by arranging the fluoropolymer powder in the friction material composition that has a waterproof effect, the fluoropolymer powder prevents the water within the pore of the friction material from being absorbed, thereby providing an effective means to inhibit the brake noise after leaving the car in the cold condition; however, no study with respect to the just-before-stopping noise has been made in the invention.

Also, although the patent document 2 inhibits the just-before-stopping noise, the invention requires not to contain the iron component, there exists a problem of restricting the flexibility when selecting the arrangement of the friction material composition.

US 2015/369320 A1 relates to a copper-free NAO friction material based on an modified organic binder. It further contains an abrasive, and PTFE in 3-15 vol%.

### [prior arts]

### [patent documents]

Patent Document 1: Japanese Provisional Patent Publication No. 2015-093936
Patent Document 2: Japanese Provisional Patent Publication No. 2016-035005

### [summary of invention]

### [problems to be resolved by the invention]

This invention provides a friction material for a disc brake pad, which is manufactured by forming a non-asbestos-organic (NAO) friction material composition that satisfies the laws and regulations with respect to the amount of a copper component contained therein and at the same time inhibits a generation of a just-before-stopping noise.

### [means to resolve the problems]

The just-before-stopping noise seems to be generated in the following mechanism.
(a) A hard inorganic friction modifier contained in the friction material cases an abrasive wear of a mating member, i.e., disc rotor, which generates an abrasive powder of the disc rotor. Then, the abrasive powder causes abrasion of a surface of the friction material, which promotes the generation of the abrasive powder of the friction material.
(b) By repeating low load braking actions, the abrasive powder that exists between the rubbing surfaces of the friction material and the mating member refines or micronizes the abrasive powder upon receiving a shearing force.
(c) Under this condition, the water enters into the rubbing surfaces between the friction material and the mating member, and after repeating the low load braking actions, the micronized abrasive powder is kneaded with the water to form an abrasive powder aggregate.
(d) The iron component such as the abrasive powder of the disc rotor existing in the abrasive powder aggregate can be a cause of the rusting, and an aggregating force of the abrasive aggregate becomes strong.
(e) If the brake is applied while the abrasive powder aggregate exists between the rubbing surfaces of the friction material and the disc rotor, the shearing force breaks the abrasive powder aggregate to cause slipping between the friction material and the mating member, which generates a low frequency noise due to the vibration.

The inventors, after serious investigation in consideration of the above-described mechanism, completed this invention as finding that the generation of the abrasive powder aggregates can be inhibited, and as the result, the generation of the just-before-stopping noise can be prevented by adding the predetermined amount of the fluoropolymer particle with the predetermined diameter as the lubricant and the predetermined amount of the zirconium oxide with the predetermined diameter as the inorganic friction modifier to the friction material composition.

This invention relates to the friction material used for the disc brake pad, which is manufactured by forming the NAO friction material composition that contains a binder, a fiber base, an inorganic friction modifier, an organic friction modifier, and a lubricant but does not contain the copper component, and this invention is based on the following technology.
(1) The friction material used for the disc brake pad, which is manufactured by forming the NAO friction material composition that contains the binder, the fiber base, the inorganic friction modifier, the organic friction modifier, and the lubricant but does not contain the copper component, wherein the friction material composition contains 0.5 - 5 weight %, relative to the entire amount of the friction material composition, of the fluoropolymer particle with the average particle diameter of 10 - 1000µm as the lubricant and 15 - 35 weight %, relative to the entire amount of the friction material composition, of the zirconium oxide with the average particle diameter of 1- 8µm as the inorganic friction modifier.
(2) Preferably, the fluoropolymer particle is polytetrafluoroethylene (PTFE) in the friction material mentioned above.

### [Advantages of the Invention]

According to this invention, in the friction material composition for the friction material used for the disc brake pad, which is manufactured by forming the NAO friction material composition, this invention can provide the friction material that satisfies the laws and regulations with respect to the amount of the copper component contained therein and at the same time inhibits the generation of the just-before-stopping noise.

### [Embodiments of the Invention]

In this invention, 0.5 - 5 weight %, relative to the entire amount of the friction material composition, of a relatively large fluoropolymer particle with an average particle diameter of 10 - 1000µm and 15 - 35 weight %, relative to the entire amount of the friction material composition, of a relatively large zirconium oxide with an average particle diameter of 1- 8µm are arranged to be added to the friction material composition.

By adding 0.5 - 5 weight %, relative to the entire amount of the friction material composition, of the fluoropolymer particle with the average diameter of 10 - 1000µm together with 15 - 35 weight %, relative to the entire amount of the friction material composition, of the zirconium oxide with the average particle diameter of 1- 8µm, which is smaller than the average particle diameter of the above-identified fluoropolymer particle, the fluoropolymer particle is refined or minimized by a grinding effect of the zirconium oxide, and fine powder of the fluoropolymer particle is uniformly dispersed in the abrasive powder of the friction material.

As the result, the abrasive powder tends not to be blended with the water, which inhibits the generation of the abrasive powder aggregate and prevents the causation of the just-before-stopping noise.

Preferable average particle diameter of the fluoropolymer particle is 20 - 100µm, and preferable amount of the fluoropolymer contained in the friction material composition is 0.8 - 3 weight % relative to the entire amount of the friction material composition.

Preferable average particle diameter of the zirconium oxide is 2 - 5µm, and preferable amount of the zirconium oxide contained in the friction material composition is 20 - 30 weight % relative to the entire amount of the friction material composition.

As the fluoropolymer particle used in this invention, either one of the fluoropolymers such as a polytetrafluoroethylene (PTFE), a tetrafluoroethylene-perfluoroalkylvinylether copolymer (PFA), or a tetrafluoroethylene-hexafluoropropylene copolymer (FEP), or any combination of two or more of the fluoropolymer particles may be used.

Among the above-fluoropolymer particles, a single use of the polytetrafluoroethylene (PTFE) powder is preferable.

In addition, in this invention, the average particle diameter means D50 measured by a laser diffraction particle size distribution method.

The friction material of this invention is manufactured from the friction material composition that contains, in addition to the above-identified fluoropolymer particle with the average particle diameter of 10 - 1000µm and the zirconium oxide with the average particle diameter of 1- 8µm, a binder, fiber base, a lubricant, an inorganic friction modifier, an organic friction modifier, a pH modifier, and a filler that are normally used for the friction material.

As the binder, either one of the binders that are normally used for the friction material such as a straight phenol resin, a cashew oil modified phenol resin, an acrylic rubber modified phenol resin, a silicone rubber modified phenol resin, a nitrile rubber (NBR) phenol resin, a phenol aralkyl resin (aralkyl modified phenol resin), a fluoropolymer dispersed phenol resin, and a silicone rubber dispersed phenol resin, or any combination of two or more of the above-identified binders may be used.

The amount of the binder contained therein is preferably 5 - 10 weight % relative to the entire amount of the friction material composition, more preferably 6 - 8 weight % relative to the entire amount of the friction material composition.

As the fiber base, either one of the fiber bases that are normally used for the friction material such as an aramid fiber, a cellulose fiber, a poly-phenylene benzbisoxazole fiber, and an acrylic fiber, or any combination of two or more of the above-identified fiber base materials may be used.

The amount of the fiber base contained therein is preferably 1- 10 weight % relative to the entire amount of the friction material composition, more preferably 2 - 4 weight % relative to the entire amount of the friction material composition.

As the lubricant, in addition to the above-identified fluoropolymer particle with the average diameter of 10 - 1000µm, either one of lubricants that are normally used for the friction material such as carbon-based lubricants such as a petroleum coke, a resilient graphitic carbon, an artificial graphite particle, and a natural graphite particle, and metal sulfide group lubricants such as a molybdenum disulfide, a zinc sulfide, an iron sulfide, a tin sulfide, and a composite metal sulfide, or any combination of two or more of the above-identified carbon-based lubricants may be used.

The amount of the lubricant contained therein, together with the above-identified fluoropolymer particle with the average diameter of 10 - 1000µm, preferably is 5 - 13 weight % relative to the entire amount of the friction material composition, more preferably 6 - 11 weight % relative to the entire amount of the friction material composition.

As the inorganic friction modifier, in addition to the above-identified zirconium oxide with the average particle diameter of 1 - 8µm, either one of particle inorganic friction modifiers such as a vermiculite, a phlogopite, a muscovite, a triiron tetroxide, a calcium silicate, a magnesium oxide, a zirconium silicate, a γ-alumina, an α-alumina, a silicon carbide, and a non-whisker-like (plate-like, scale, columnar, indefinite shape having multiple projections) titanate (potassium hexatitanate, a potassium octatitnate, a lithium potassium titanate, or a magnesium potassium titanate) or fiber inorganic friction modifiers such as a wollastonite, a sepiolite, a basalt fiber, a glass fiber, or a biosoluble artificial mineral fibers, and a rock wool, or any combination of two or more of the above-identified inorganic friction modifiers may be used.

The amount of the inorganic friction modifier contained therein, together with the above-identified zirconium oxide with the average particle size of 1- 8µm, preferably is 40 - 75 weight % relative to the entire amount of the friction material composition, more preferably 45 - 70 weight % relative to the entire amount of the friction material composition.

As the organic friction modifier, either one of the organic friction modifiers that are normally used for the friction material such as a cashew dust, tire tread rubber pulverized powder, and vulcanized rubber powders or unvulcanized rubber powders such as a nitrile rubber, an acrylic rubber, a silicone rubber, and a butyl rubber, or any combination of two or more of the above-identified organic friction modifiers may be used.

The amount of the organic friction modifier contained therein preferably is 4 - 10 weight % relative to the entire amount of the friction material composition, more preferably 6 - 8 weight % relative to the entire amount of the friction material composition.

As the pH modifier, the pH modifiers that are normally used for the friction material such as a calcium hydroxide may be used. The amount of the pH modifier contained therein preferably is 1- 4 weight % relative to the entire amount of the friction material composition, more preferably 2 - 3 weight % relative to the entire amount of the friction material composition.

As remaining materials in the friction material composition, fillers such as a barium sulfate and a calcium carbonate may be used.

The friction material of this invention, which is used for a disc brake, is manufactured through a mixing process to uniformly mix the predetermined amount of the friction material composition by a mixer, a heat-press-forming process to superpose the obtained raw friction material mixture on a separately prepared, prewashed, pre-surface-treated, and pre-adhesive-coated back plate to be positioned in a heat-forming die and to heat-press-form the raw friction material mixture and the back plate, a heat treatment process to heat the obtained item to complete a curing effect of the binder contained therein, a coating process to coat the cured item, a baking process to bake the coating thereon, and a grinding process to grind a surface of the resulted item to form a friction surface.

As necessary, prior to the heat-press-forming process, a granulating process to granulate the raw friction material mixture, or a kneading process to knead the raw friction material mixture, and a preforming process to position either the raw friction material mixture or the granulated item obtained through the granulating process and the kneaded item obtained through the kneading process in a pre-forming die and to form a preformed intermediate item, may be performed, and a scorching process may be performed after the heat-press-forming process.

This invention is explained concretely using the Embodiments and the Comparative Examples of this invention in the following sections; however, this invention is not limited to the following Embodiments.

### [Embodiments 1- 17 and Comparative Examples 1- 8 of the Manufacturing Method of the Friction Material]

The friction material compositions shown in Tables 1 -3 are positioned in the Loedige mixer to be mixed for about 5 minutes and is pressed in a pre-forming die under 30MPa for about 10 seconds to obtain the preformed intermediate item. The preformed intermediate item is superposed on the steel back plate, which is pre-washed, pre-surface treated, and pre-adhesive coated, to be heat-press-formed in the heat forming die at 150 centigrade under the forming pressure of 40MPa for about 10 minutes. Then, heat treatment at 200 centigrade is performed on the coated item for about 5 hours to perform the heat treatment (postcuring), and the friction surface of the friction material is grinded to finally form the disc brake pad for a passenger car. (Embodiments 1 - 17 and Comparative Examples 1 - 8).

**[Table1]**

| | | Embodiments | | | | | | | | |
|---|---|---|---|---|---|---|---|---|---|---|
| | | 1 | 2 | 3 | 4 | 5 | 6 | 7 | 8 | 9 |
| binder | straight phenol resin | 7.0 | 7.0 | 7.0 | 7.0 | 7.0 | 7.0 | 7.0 | 7.0 | 7.0 |
| fiber base | aramid fiber | 2.0 | 2.0 | 2.0 | 2.0 | 2.0 | 2.0 | 2.0 | 2.0 | 2.0 |
| Lubricant | zinc sulfide | 1.0 | 1.0 | 1.0 | 1.0 | 1.0 | 1.0 | 1.0 | 1.0 | 1.0 |
| | graphite | 5.0 | 5.0 | 5.0 | 5.0 | 5.0 | 5.0 | 5.0 | 5.0 | 5.0 |
| | polytetrafluoroethylene particle (average particle diameter of 8µm) | | | | | | | | | |
| | polytetrafluoroethylene particle (average particle diameter of 10µm) | 1.0 | | | | | | | | |
| | polytetrafluoroethylene | | 1.0 | | | | | | | |
| | particle (average particle diameter of 20µm) | | | | | | | | | |
| | polytetrafluoroethylene particle (average particle diameter of 40µm) | | | 1.0 | | | 0.5 | 0.8 | 3.0 | 5.0 |
| | polytetrafluoroethylene particle (average particle diameter of 100µm) | | | | 1.0 | | | | | |
| | polytetrafluoroethylene particle (average particle diameter of 1000µm) | | | | | 1.0 | | | | |
| | polytetrafluoroethylene particle (average particle diameter of 1200µm) | | | | | | | | | |
| inorganic friction modifier | zirconium silicate | 1.0 | 1.0 | 1.0 | 1.0 | 1.0 | 1.0 | 1.0 | 1.0 | 1.0 |
| | platy potassium hexatitanate | 20.0 | 20.0 | 20.0 | 20.0 | 20.0 | 20.0 | 20.0 | 20.0 | 20.0 |
| | magnesia mica | 4.0 | 4.0 | 4.0 | 4.0 | 4.0 | 4.0 | 4.0 | 4.0 | 4.0 |
| | platy potassium hexatitanate | 3.0 | 3.0 | 3.0 | 3.0 | 3.0 | 3.0 | 3.0 | 3.0 | 3.0 |
| | zirconium oxide (average particle diameter of 0.5µm) | | | | | | | | | |
| | zirconium oxide (average particle diameter of 1µm) | | | | | | | | | |
| | zirconium oxide (average particle diameter of 2µm) | | | | | | | | | |
| | zirconium oxide (average particle diameter of 3µm) | 25.0 | 25.0 | 25.0 | 25.0 | 25.0 | 25.0 | 25.0 | 25.0 | 25.0 |
| | zirconium oxide (average particle diameter of 5µm) | | | | | | | | | |
| | zirconium oxide (average particle diameter of 8µm) | | | | | | | | | |
| | zirconium oxide (average particle diameter of 10µm) | | | | | | | | | |
| | bio-soluble artificial mineral fiber | 3.0 | 3.0 | 3.0 | 3.0 | 3.0 | 3.0 | 3.0 | 3.0 | 3.0 |
| organic | cashew dust | 5.0 | 5.0 | 5.0 | 5.0 | 5.0 | 5.0 | 5.0 | 5.0 | 5.0 |
| friction modifier | pulverized powder of tire tread rubber | 1.0 | 1.0 | 1.0 | 1.0 | 1.0 | 1.0 | 1.0 | 1.0 | 1.0 |
| pH modifier | calcium hydroxide | 3.0 | 3.0 | 3.0 | 3.0 | 3.0 | 3.0 | 3.0 | 3.0 | 3.0 |
| filler | barium sulfate | 19.0 | 19.0 | 19.0 | 19.0 | 19.0 | 19.5 | 19.2 | 17.0 | 15.0 |
| Total (weight %) | | 100.0 | 100.0 | 100.0 | 100.0 | 100.0 | 100.0 | 100.0 | 100.0 | 100.0 |
| evaluation result | product appearance | G | G | G | G | G | G | G | G | G |
| | just-before-stopping noise | E | E | E | G | P | P | G | E | E |
| | braking effectiveness | P | G | E | E | E | E | E | G | P |
| | brake noise | E | E | E | E | E | E | E | E | E |

**[Table 2]**

| | | Embodiments | | | | | | | |
|---|---|---|---|---|---|---|---|---|---|
| | | 10 | 11 | 12 | 13 | 14 | 15 | 16 | 17 |
| binder | straight phenol resin | 7.0 | 7.0 | 7.0 | 7.0 | 7.0 | 7.0 | 7.0 | 7.0 |
| fiber base | aramid fiber | 2.0 | 2.0 | 2.0 | 2.0 | 2.0 | 2.0 | 2.0 | 2.0 |
| Lubricant | zinc sulfide | 1.0 | 1.0 | 1.0 | 1.0 | 1.0 | 1.0 | 1.0 | 1.0 |
| | graphite | 5.0 | 5.0 | 5.0 | 5.0 | 5.0 | 5.0 | 5.0 | 5.0 |
| | polytetrafluoroethylene particle (average particle diameter of 8µm) | | | | | | | | |
| | polytetrafluoroethylene particle (average particle diameter of 10µm) | | | | | | | | |
| | polytetrafluoroethylene particle (average particle diameter of 20µm) | | | | | | | | |
| | polytetrafluoroethylene particle (average particle diameter of 40µm) | 1.0 | 1.0 | 1.0 | 1.0 | 1.0 | 1.0 | 1.0 | 1.0 |
| | polytetrafluoroethylene particle (average particle diameter of 100µm) | | | | | | | | |
| | polytetrafluoroethylene particle (average particle diameter of 1000µm) polytetrafluoroethylene particle (average particle diameter of 1200µm) | | | | | | | | |
| inorganic friction modifier | zirconium silicate | 1.0 | 1.0 | 1.0 | 1.0 | 1.0 | 1.0 | 1.0 | 1.0 |
| | platy potassium hexatitanate | 20.0 | 20.0 | 20.0 | 20.0 | 20.0 | 20.0 | 20.0 | 20.0 |
| | magnesia mica | 4.0 | 4.0 | 4.0 | 4.0 | 4.0 | 4.0 | 4.0 | 4.0 |
| | triiron tetraoxide | 3.0 | 3.0 | 3.0 | 3.0 | 3.0 | 3.0 | 3.0 | 3.0 |
| | zirconium oxide (average particle diameter of 0.5µm) | | | | | | | | |
| | zirconium oxide (average particle diameter of 1µm) | 25.0 | | | | | | | |
| | zirconium oxide (average particle diameter of 2µm) | | 25.0 | | | | | | |
| | zirconium oxide (average particle diameter of 3µm) | | | | | 15.0 | 20.0 | 30.0 | 35.0 |
| | zirconium oxide (average particle diameter of 5µm) | | | 25.0 | | | | | |
| | zirconium oxide (average particle diameter of 8µm) | | | | 25.0 | | | | |
| | zirconium oxide (average particle diameter of 10µm) | | | | | | | | |
| | bio-soluble artificial mineral fiber | 3.0 | 3.0 | 3.0 | 3.0 | 3.0 | 3.0 | 3.0 | 3.0 |
| organic friction modifier | cashew dust | 5.0 | 5.0 | 5.0 | 5.0 | 5.0 | 5.0 | 5.0 | 5.0 |
| | pulverized powder of tire tread rubber | 1.0 | 1.0 | 1.0 | 1.0 | 1.0 | 1.0 | 1.0 | 1.0 |
| pH modifier | calcium hydroxide | 3.0 | 3.0 | 3.0 | 3.0 | 3.0 | 3.0 | 3.0 | 3.0 |
| filler | barium sulfate | 19.0 | 19.0 | 19.0 | 19.0 | 29.0 | 24.0 | 14.0 | 9.0 |
| Total (weight %) | | 100.0 | 100.0 | 100.0 | 100.0 | 100.0 | 100.0 | 100.0 | 100.0 |
| evaluation result | product appearance | G | G | G | G | G | G | G | G |
| | just-before-stopping noise | E | E | E | G | P | P | G | E |
| | braking effectiveness | P | G | E | E | E | E | E | G |
| | brake noise | E | E | E | E | E | E | E | E |

**[Table 3]**

| | | Comparative Examples | | | | | | | |
|---|---|---|---|---|---|---|---|---|---|
| | | 1 | 2 | 3 | 4 | 5 | 6 | 7 | 8 |
| binder | straight phenol resin | 7.0 | 7.0 | 7.0 | 7.0 | 7.0 | 7.0 | 7.0 | 7.0 |
| fiber base | aramid fiber | 2.0 | 2.0 | 2.0 | 2.0 | 2.0 | 2.0 | 2.0 | 2.0 |
| Lubricant | zinc sulfide | 1.0 | 1.0 | 1.0 | 1.0 | 1.0 | 1.0 | 1.0 | 1.0 |
| | graphite | 5.0 | 5.0 | 5.0 | 5.0 | 5.0 | 5.0 | 5.0 | 5.0 |
| | polytetrafluoroethylene particle (average particle diameter of 8µm) | 1.0 | | | | | | | |
| | polytetrafluoroethylene particle (average particle diameter of 10µm) | | | | | | | | |
| | polytetrafluoroethylene particle (average particle diameter of 20µm) | | | | | | | | |
| | polytetrafluoroethylene particle (average particle diameter of 40µm) | | | 0.3 | 6.0 | 1.0 | 1.0 | 1.0 | 1.0 |
| | polytetrafluoroethylene particle (average particle diameter of 100µm) | | | | | | | | |
| | polytetrafluoroethylene particle (average particle diameter of 1000µm) | | | | | | | | |
| | polytetrafluoroethylene particle (average particle diameter of 1200µm) | | 1.0 | | | | | | |
| inorganic friction modifier | zirconium silicate | 1.0 | 1.0 | 1.0 | 1.0 | 1.0 | 1.0 | 1.0 | 1.0 |
| | platy potassium hexatitanate | 20.0 | 20.0 | 20.0 | 20.0 | 20.0 | 20.0 | 20.0 | 20.0 |
| | magnesia mica | 4.0 | 4.0 | 4.0 | 4.0 | 4.0 | 4.0 | 4.0 | 4.0 |
| | triiron tetraoxide | 3.0 | 3.0 | 3.0 | 3.0 | 3.0 | 3.0 | 3.0 | 3.0 |
| | zirconium oxide (average particle diameter of 0.5µm) | | | | | 25.0 | | | |
| | zirconium oxide (average particle diameter of 1µm) | | | | | | | | |
| | zirconium oxide (average particle diameter of 2µm) | | | | | | | | |
| | zirconium oxide (average particle diameter of 3µm) | 25.0 | 25.0 | 25.0 | 25.0 | | | 13.0 | 38.0 |
| | zirconium oxide (average particle diameter of 5µm) | | | | | | | | |
| | zirconium oxide (average particle diameter of 8µm) | | | | | | | | |
| | zirconium oxide (average particle diameter of 10µm) | | | | | | 25.0 | | |
| | bio-soluble artificial mineral fiber | 3.0 | 3.0 | 3.0 | 3.0 | 3.0 | 3.0 | 3.0 | 3.0 |
| organic friction modifier | cashew dust | 5.0 | 5.0 | 5.0 | 5.0 | 5.0 | 5.0 | 5.0 | 5.0 |
| | pulverized powder of tire tread rubber | 1.0 | 1.0 | 1.0 | 1.0 | 1.0 | 1.0 | 1.0 | 1.0 |
| pH modifier | calcium hydroxide | 3.0 | 3.0 | 3.0 | 3.0 | 3.0 | 3.0 | 3.0 | 3.0 |
| filler | barium sulfate | 19.0 | 19.0 | 19.7 | 14.0 | 19.0 | 19.0 | 31.0 | 6.0 |
| Total (weight %) | | 100.0 | 100.0 | 100.0 | 100.0 | 100.0 | 100.0 | 100.0 | 100.0 |
| evaluation result | product appearance | G | G | G | G | G | G | G | G |
| | just-before-stopping noise | E | E | E | G | P | P | G | E |
| | braking effectiveness | P | G | E | E | E | E | E | G |
| | brake noise | E | E | E | E | E | E | E | E |

The obtained friction material was evaluated as to the product appearance, the just-before-stopping noise, the braking effectiveness, and the brake noise.

Evaluation standard is shown in Table 4 and Table 5, and Evaluation Result is shown in Table 1, Table 2, and Table 3.

**[Table 4]**

| product appearance | | |
|---|---|---|
| evaluation method | | visual evaluation of product appearance |
| evaluation items | | existence of wrinkles and cracks |
| evaluation standard | good | wrinkles and crack |
| | no good | no wrinkles and crack |

**[Table 5]**

| | | Just-before-stopping noise | Braking Effectiveness | Brake Noise |
|---|---|---|---|---|
| Evaluation Method | | Actual Vehicle Test | Based on JASO C406 (Passenger Car Brake Device Dynamometer Test Method) | Based on JASO C402 (Passenger Car Brake Actual Vehicle Test Method) |
| | | rubbing at the initial speed of 30km/h with the deceleration speed of 0.1G for 3000 braking cycles | | |
| | | | 2nd Effect Test | |
| | | | vehicle speed of 130km/h at the deceleration speed of 0.3G | |
| | | ↓ | | |
| | | leaving one night | | |
| | | ↓ | | |
| | | moving forward and backward twice at the initial speed of 10km at 0.5 - 3.0MPa (0.5 pitch) | | |
| Evaluation Items | | Just-before-stopping noise (Sensory Evaluation) | Average Friction Coefficient | Rage of Incidence of Brake Noise |
| Evaluation Standard | E | **No** noise unless searching (very slight rustling) | 0.40 or more | 0% |
| | G | No noise unless searching (bearable noise if existed) | 0.37 or more but less than 0.40 | over 0% but less than 5% |
| | P | Bearable noise | 0.34 or more but less than 0.37 | 5% or more but less than 10% |
| | F | Uncomfortable noise | less than 0.34 | 10% or more |
| | - | Unable to evaluate because of the product wrinkle or crack | Unable to evaluate because of the product wrinkle or crack | Unable to evaluate because of the product wrinkle or crack |

As shown in the respective Table, the composition arrangements that satisfy the composition standard of this invention do not show an adverse effect on the noise prevention effect and shows satisfactory evaluation results for inhibiting the generation of the just-before-stopping noise.

### [industrial applicability]

According to this invention, in the friction material used for the disc brake pad, which is manufactured by forming the NAO friction material composition, this invention can offer the friction material that satisfies the laws and regulations with respect to the amount of the copper component contained therein and at the same time inhibits the generation of the just-before-stopping noise, thereby offering great practical value.

## Claims

1. A friction material used for a disc brake pad, which is manufactured by forming a non-asbestos-organic (NAO) friction material composition that contains a binder, a fiber base, an inorganic friction modifier, an organic friction modifier, and a lubricant but does not contain a copper component, **characterized in that**
the friction material composition contains 0.5 - 5 weight %, relative to the entire amount of the friction material composition, of a fluoropolymer particle with an average particle diameter of 10 - 1000µm as the lubricant and 15 - 35 weight %, relative to the entire amount of the friction material composition, of a zirconium oxide with an average particle diameter of 1- 8µm as the inorganic friction modifier.

2. The friction material according to Claim 1, **characterized in that** the fluoropolymer particle is a polytetrafluoroethylene (PTFE).

## Patentansprüche

1. Reibungsmaterial für einen Scheibenbremsbelag, das durch Bilden einer asbestfreien organischen (NAO) Reibungsmaterialzusammensetzung hergestellt wird, die ein Bindemittel, eine Faserbasis, einen anorganischen Reibungsmodifikator, einen organischen Reibungsmodifikator und ein Schmiermittel enthält, jedoch keine Kupferkomponente enthält,
**dadurch gekennzeichnet, dass**
die Reibungsmaterialzusammensetzung 0,5 - 5 Gew.-%, bezogen auf die Gesamtmenge der Reibungsmaterialzusammensetzung, eines Fluorpolymerteilchen mit einem durchschnittlichen Teilchendurchmesser von 10 - 1000 µm als Schmiermittel, und 15 - 35 Gew.-%, bezogen auf die Gesamtmenge der Reibungsmaterialzusammensetzung, eines Zirkoniumoxids mit einem mittleren Teilchendurchmesser von 1 - 8 µm als anorganischen Reibungsmodifikator, enthält.

2. Reibungsmaterial nach Anspruch 1, **dadurch gekennzeichnet, dass** das Fluorpolymerteilchen ein Polytetrafluorethylen (PTFE) ist.

## Revendications

1. Matériau de friction utilisé pour une plaquette de frein à disque, fabriqué en formant une composition de matériau de friction non amiante-organique (NAO) qui contient un liant, une base de fibres, un modificateur de friction inorganique, un modificateur de friction organique et un lubrifiant, mais ne contient pas de composant à base de cuivre,
**caractérisée par le fait que**
la composition de matériau de friction contient 0,5 - 5 % en poids, par rapport à la quantité totale de la composition de matériau de friction, d'une particule de polymère fluoré d'un diamètre moyen de 10 à 1000 µm en tant que lubrifiant, et 15 - 35 % en poids, par rapport à la quantité totale de la composition de matériau de friction, d'un oxyde de zirconium d'un diamètre moyen de 1 - 8 µm comme modificateur de friction inorganique.

2. Matériau de friction selon la revendication 1, **caractérisé en ce que** la particule de polymère fluoré est un polytétrafluoroéthylène (PTFE).
